# EUROPEAN PATENT APPLICATION

(11) **EP 2 444 026 A1**
(43) Date of publication of application: **25.04.2012**
(21) Application number: 10188229.8
(22) Date of filing: 20.10.2010
(51) Int. Cl.: A61C 8/00

(54) **A dental component, a dental fixture and a dental implant assembly**

(71) Applicant: Astra Tech AB, 431 21 Mölndal (SE)
(72) Inventor: Holmström, Johan, SE-428 37, KÅLLERED (SE); Johansson, Henrik, SE-416 58, GÖTEBORG (SE)
(74) Representative: Somlo, Tommy

(57) **Abstract**

The invention relates to dental component, comprising a fixture engagement portion for engaging the dental component with a dental fixture adapted to be inserted into a jawbone. The dental component has an irregular shape, wherein two wall portions are asymmetrically arranged with respect to a centre plane which coincides with the extension of the centre axis of the fixture engagement portion. The invention also relates to a corresponding dental fixture and to a dental implant assembly.

## Description

### Technical field

The present invention relates to a dental component, comprising a fixture engagement portion for engaging the dental component with a dental fixture adapted to be inserted into a jawbone. The invention also relates to a dental fixture and a dental implant assembly.

### Background of the Invention

A frequent way today to restore a damaged or lost tooth is to install a dental implant comprising a fixture in the adjacent jawbone tissue (maxilla or mandible) and replace the damaged or lost tooth with a dental prosthesis. A superstructure, such as an abutment, may be used as a connection between the dental prosthesis and the installed fixture.

There are various abutment/fixture-interfaces on the market. For instance, one common interface is the hexagonal interface, which allows an abutment to be positioned in six different rotational positions relative to the fixture. Although this provides a freedom of operation for the dentist in choosing a desired orientation, it sometimes happens that the dentist, by mistake, places the abutment in a different orientation than the one he/she actually intended.

Also, when a dental technician prepares a prosthetic tooth in the laboratory, he/she designs the prosthetic tooth so as to naturally fit with the remaining teeth of the patient, both for functionality and aesthetics. To this end the dental technician may try out a proper prosthesis for the individual patient, using a model of the jaw of the patient, said model including the fixture. The dental technician may also modify a pre-fabricated abutment to match the contour of the soft gingival tissue.

Thus, when making the abutment and the prosthetic tooth, the dental technician has taken into account the surrounding tissue and adjacent teeth. The dentist receives the abutment and prosthetic tooth either as one integral unit or as separate parts to be assembled in the oral cavity of the patient. Often, the dentist who receives the abutment and the prosthetic tooth will understand how the abutment should be rotationally oriented relative to the fixture in order to obtain the alignment as intended by the dental technician. Nevertheless, it may sometimes be difficult for the dentist to see which is the correct orientation and, of course, there may be a risk of the dentist simply overlooking or ignoring the correct rotational orientation of the abutment relative to the fixture.

It is an object of the invention to mitigate the risk of a dentist connecting a dental component, such as an abutment, to a dental fixture with another rotational orientation than that which he/she acatually desired.

It is also an object of the invention to mitigate the risk of a dentist connecting a dental component, such as an abutment, to a dental fixture with another rotational orientation than what was intended by the dental technician.

These and other objects, which will become apparent in the following, are achieved by the dental component, the dental fixture and the dental implant assembly as defined in the accompanying claims.

### Summary of the Invention

The present invention is based on the insight that the commonly used hexagonal fixture/abutment-interface can be modified so as to enable a fixture to receive one type of an abutment in a single rotational position, while another type of an abutment may be received in six rotational positions. In particular it is realized that by modifying one of the six sides or corners of the hexagon, or five of the six sides/corners of the hexagon, an asymmetry is created around a centre plane of the interface. It has also been realized that for certain modifications of the hexagon of the fixture, although a correspondingly modified abutment can only be connected in a single rotational position, a normal abutment with unmodified hexagon may still be arranged in six rotational positions, thus allowing continued manufacturing of those well-known normal abutments. Furthermore, it has been realized that the above described modification of a fixture/abutment interface is not only applicable to a hexagonal interface, but would be equally applicable to other polygons, such as triangular, square-shaped, pentagonal, heptagonal, octagonal, etc. interfaces. In fact, the modification is also achievable with interface-shapes having rounded or truncated corners.

According to at least a first aspect of the invention, a dental component is provided. The dental component comprises a fixture engagement portion for engaging the dental component with a dental fixture adapted to be inserted into a jawbone,
- the fixture engagement portion comprising a circumferential contour defined by a plurality of first wall portions and at least one second wall portion, wherein a major part of said circumferential contour does not form an arc of a circle,
- each one of the first wall portions being contained in a respective peripheral plane or having a plurality of peripheral planes tangential to the wall portion, wherein said one or more peripheral planes of each first wall portion do not intersect any other one of said first wall portions,
- wherein the second wall portion is located entirely on one side of a geometrical centre plane which coincides with the extension of the centre axis of the fixture engagement portion, wherein the second wall portion and any wall portion on the other side of said centre plane are asymmetrically arranged with respect to the centre plane.

Due to the irregularity caused by the second wall portion, the dental component can only be engaged in one rotational position (indexing position) with respect to a dental fixture having the corresponding mating first and second wall portions.

Thus, the first wall portions form part of an open structure, such as part of a convex polygon wherein every internal angle is less than 180°. However, the second wall portion disrupts this symmetry, and may have one or more peripheral planes which intersect the first wall portions.

The circumferential contour of the engagement portion may, for instance be an internal perimeter of a socket, wherein the dental component is a female part to be connected to the male part fixture. Alternatively, the circumferential contour of the engagement portion may be an external perimeter of a male part dental component which is to be inserted into a female part fixture.

As mentioned above, the engagement portion has a circumferential contour, the major part of which forms another shape than an arc of a circle. Thus, in case one or more wall portions of the engagement portion forms an arc of a circle, that arc does not extend more than 50% along the circumference of said contour. This is in contrast to fixture/abutment-interfaces which are based on a circular contour interrupted by an indexing protrusion or recess. However, it should be noted that the dental component of the present invention is not precluded from having one or some wall portions in the form of arcs of a circle, as long as the major part of said contour does not form an arc of a circle. Indeed, in at least some example embodiments at least some of said first wall portions may be curved into individual arcs.

Suitably, the major part of the circumferential contour does not form a plurality of arcs of the same circle. Rather, according to at least one example embodiment, any optional curved first and/or second wall portion forms an arc of a circle, which circle does not coincide with the extension of the arc of any other curved first and/or second wall portion. More specifically, according to at least one example embodiment, at least two of said first and/or second wall portions are curved, wherein each curved wall portion forms an arc of a circle, which circle does not coincide with the extension of the arc(s) of the other curved wall portion(s).

According to at least one example embodiment of the invention, the said circumferential contour has the shape of a polygon with one deformed side or one deformed corner. Non-deformed sides may be said first wall portions and deformed sides may be said second wall portion. For instance, all first wall portions may be equally dimensioned with respect to each other. Also, each first wall portions may be arranged at the same angle to the neighbouring first wall portions. However, as an alternative, there may be differently sized first wall portions. For instance there may be a number of larger first wall portions, which are interconnected by smaller first wall portions. One example would be large first wall portions arranged at 90° with respect to each other, while the smaller first wall portions (interconnecting the larger first wall portions) form an angle of 135° with the neighbouring larger first wall portions.

According to at least one example embodiment of the invention, said circumferential contour has the shape of an n-sided polygon interconnected at n corners in which n-1 sides have been equally deformed while the remaining side is straight, or in which n-1 corners have been equally deformed while the remaining corner is non-deformed, wherein n ≥ 3. The deformation may e.g. be a curved deformation. For instance, the deformation may be an expansion away from the centre axis of the engagement portion, i.e. a radially increased separation from the centre axis. Alternatively, the deformation may be directed towards the centre axis, i.e. a raidally reduced distance with respect to the centre axis.

The above discussed modifications of sides and/or corners are reflected in a second aspect of the invention.

Thus, according to at least a second aspect of the invention, a dental component is provided. The dental component comprises a fixture engagement portion for engaging the dental component with a dental fixture adapted to be inserted into a jawbone, the fixture engagement portion comprising a circumferential contour derived from a substantially polygonal shape having a plurality of straight segments interconnected at corners, with the modification that:
- one segment of the polygonal shape is deformed while the others segments are straight, or only one segment of the polygonal shape is straight while the others are deformed, or
- one corner of the polygonal shape is deformed relative to the others, or all corners but one are deformed.

Thus, the asymmetry established through modification of one segment or corner, or the modification of all except for one segments or corners, enables a dental component to be engaged in only one rotational position relative to a fixture having a corresponding asymmetrically geometry.

According to at least one example embodiment of either one of the first and second aspects of the invention, said circumferential contour has substantially the shape of a square or a hexagon with only one deformed segment or only one deformed corner. The square and hexagon are frequently used shapes in abutment/fixture-interfaces. Therefore, it may be advantageous to base the shape of the circumferential contour on such a shape, wherein despite the modification, the users will feel acquainted with the shapes of the circumferential contour. However, it should be understood that in alternative example embodiments, the circumferential contour may have other shapes, such as an octagon or a twelve-sided polygon.

As an alternative to deforming one of the segments or corners of the square/hexagon, the reverse is also conceivable, i.e. to deform all except for one segment or corner. Thus, according to at least one example embodiment, said circumferential contour has substantially the shape of a square with only three deformed segments or corners, or has the shape or a hexagon with only five deformed segments or corners.

According to at least one example embodiment, a first distance from the centre axis of the fixture engagement portion to a position along one of the polygon segments or corners is longer than the distance from the centre axis to a corresponding position along any of the other polygon segments or corners. For instance, this first distance may be achieved by a segment which has been deformed with a convex curvature with respect to the centre axis, i.e. extending outwardly from the centre axis. Another alternative would be to have only a portion of a segment deformed, e.g. a straight segment provided with a radially outwardly extending protrusion (if the dental component is a male part, wherein the circumferential contour of the engagement portion is an outer perimeter) or a radially outwardly extending recesses (if the dental component is a female part, wherein the circumferential contour of the engagement portion is an inner perimeter). It should be noted that the term "radially" means a direction extending perpendicularly from the centre axis of the engagement portion. Thus, the circumferential contour of the engagement portion can, for instance, be based on a polygonal shape as previously described. Similarly a corner may be enlarged by means of, for instance, a radially extending recess or protrusion.

According to at least one alternative example embodiment a first distance from the centre axis of the fixture engagement portion to a position along one of the polygon segments or corners is shorter than the distance from the centre axis to a corresponding position along any of the other polygon segments or corners. For instance, this first distance may be achieved by a segment which has been deformed with a concave curvature with respect to the centre axis, i.e. extending inwardly towards the centre axis. Another alternative would be to have only a portion of a segment deformed, e.g. a straight segment provided with a radially inwardly directed protrusion (if the dental component is a female part) or recess (if the dental component is a male part).

According to at least one example embodiment, the fixture engagement portion comprises a substantially cylindrical section, wherein said wall portions or segments are provided at said substantially cylindrical section. It should be understood that a cylinder does not have to have a circular cross-section. In a straight cylinder the enveloping surface extends from a base at a right angle, i.e. the enveloping surface of a cylinder extends in parallel with the centre axis of the cylinder.

According to at least one example embodiment, the fixture engagement portion comprises an apically tapering section, wherein said wall portions or segments are provided at said apically tapering section. The apically tapering section may be advantageous for providing a conical seal with a corresponding tapering section of a fixture socket. The apically tapering section is suitably provided on a dental component in the form of a male part to be connected to a fixture in the form of a female part.

According to at least one example embodiment, the fixture engagement portion comprises a coronally tapering section, wherein said wall portions or segments are provided at said coronally tapering section. The coronally tapering section may suitably be provided on a dental component in the form of a female part to be connected to a fixture in the form of a male part.

According to at least one example embodiment, the dental component is a component selected from the group consisting of an abutment, an abutment replica, an abutment blank, a driver, a healing cap and an impression pick-up element. Thus, the inventors have realized that not only the interface between an abutment and a fixture may benefit from the ideas presented herein, but would also be applicable to other components that are to be engaged with a dental fixture.

According to at least one example embodiment, the dental component is in the form of an abutment comprising a body part and a screw part, wherein the body part comprises
- said fixture engagement portion,
- a prosthesis-receiving portion which extends coronally of the fixture,
   and
- a through hole extending through the body part,
wherein the screw part is adapted to be inserted into the through hole and engage an internal thread of the fixture in order to secure the body part to the fixture.

It should be noted, that in this application, a prosthesis-receiving portion is not limited to receive a prosthetic crown, but may also function as a bridge support.

According to at least one example embodiment, the dental component is in the form of an angled abutment in which the fixture engagement portion has a first longitudinal axis and the prosthesis-receiving portion has a second longitudinal axis, wherein the first and second longitudinal axes are inclined at a non-zero angle relative to each other. Said angle may e.g. be in the range of 5°-60°, such as 10°-50°, for instance 15°-45°.

It should be noted that all of the dental components encompassed by the present application, may be connected to a fixture having a flat top, a wave-shaped top, a sloped top, or some otherwise shaped fixture. For instance, for a fixture having a sloped top portion, it may be desirable to have a similarly sloping portion of the engaging abutment so that such a sloping portion follows the contour of the gingiva. Thus, in that case it is desirable to only have one indexing position for the abutment. However, to compensate for a disadvantageous direction of extension of the abutment, the prosthesis carrying portion may be inclined relative to the fixture engagement portion.

According to at least one example embodiment, the dental component is in the form of a driver for driving the fixture into the jawbone, wherein the driver is provided with a distinctive mark to indicate to a user the rotational position of the fixture relative to the jawbone as the fixture is being driven into the jawbone. For instance, the driver may suitably be connected to a slope topped fixture in only one rotational position, such that when the driver is connected to the fixture, the visible distinctive marking has a predetermined position relative to the sloping direction of the fixture. Thus, even if the user cannot see the small slope on the fixture, he/she will be able to infer the orientation of the slope from the visible distinctive marking on the driver.

According to at least a third aspect of the invention, a dental fixture for insertion into a jawbone is provided. The dental fixture comprises a component engagement portion being configured to receive a dental component,
- the component engagement portion comprising a circumferential contour defined by a plurality of first wall portions and at least one second wall portion, wherein a major part of said circumferential contour does not form an arc of a circle,
- each one of the first wall portions being contained in a respective peripheral plane or having a plurality of peripheral planes tangential to the wall portion, wherein said one or more peripheral planes of each first wall portion do not intersect any other one of said first wall portions,
- wherein the second wall portion is located entirely on one side of a geometrical centre plane which coincides with the extension of the centre axis of the fixture engagement portion, wherein the second wall portion and any wall portion on the other side of said centre plane are asymmetrically arranged with respect to the centre plane.

According to at least a fourth aspect of the invention a dental fixture for insertion into a jawbone is provided. The dental fixture comprises a component engagement portion being configured to receive a dental component, the component engagement portion comprising a circumferential contour derived from a substantially polygonal shape having a plurality of straight segments interconnected at corners, with the modification that:
- one segment of the polygonal shape is deformed while the others segments are straight, or only one segment of the polygonal shape is straight while the others are deformed, or
- one corner of the polygonal shape is deformed relative to the others, or all corners but one are deformed.

The dental fixture in accordance with either one of said third and fourth aspects of the invention may have a component engagement portion which comprises the corresponding features and shapes as those defined for the fixture engagement portion of the dental component according to any one of first and second aspects of the invention.

According to at least a fifth aspect of the invention, a dental implant assembly is provided. The implant assembly comprises a dental component in accordance with either one of said first and second aspects of the invention connected to or to be connected to a fixture in accordance with either one of said third and fourth aspects of the invention, wherein the dental component only has one possible indexing (i.e. rotational) position relative to the fixture.

Suitably the fixture comprises a buccal side and a lingual side, wherein in the implanted state, the second wall portion (or the odd segment or corner) of the component engagement portion is adapted to be arranged in a predetermined rotational position relative to the buccal side. If said dental component is a driver, it may be provided with a distinctive visual marking to indicate the relative position with respect to the buccal side. This helps the user to insert the fixture in an appropriate rotational position relative to the jawbone. At the coronal end, the fixture may suitably have a longer extension on the lingual side compared to the buccal side. However, flat topped fixtures having equally long extensions are also conceivable alternatives.

It should be understood that in the present disclosure, a dental implant may comprise a dental fixture and a superstructure, such as an abutment.

A dental fixture is for use as the anchoring member of a dental prosthesis. To this end, the dental fixture is insertable into a pre-prepared bore hole in the bone tissue of a jawbone (maxilla or mandible) at a site where the dental prosthesis is required. The dental fixture is normally rotated into the bore hole.

For screw-type dental fixtures the bore hole may be provided with internal threads in advance or may be left un-tapped with the dental fixture provided with a self-tapping capacity, e.g. by the provision of one or more axially-extending cutting recesses, edges or notches, etc in the fixture thread. For instance, an apical end portion of the fixture may be provided with 2-4 cutting recesses, such as 3 cutting recesses. Other number of cutting recesses are readily conceivable.

A superstructure for connecting a prosthetic part to the fixture may comprise an abutment, spacer or other transmucosal component which engages to the dental fixture to bridge the gingiva overlying the maxilla or mandible. The prosthetic part, e.g. a crown, bridge or denture may be secured to the abutment. There are various other forms that the superstructure can take. For instance, the prosthetic part may be secured directly to the dental fixture. A dental implant may thus comprise an abutment connected to the dental fixture, or the dental fixture without an abutment.

The term "coronal" is here and throughout this application used to indicate a direction towards a head end or trailing end of the dental implant. For instance, in a situation where an abutment is connected to a dental fixture, the coronal direction of the abutment would be a direction towards the part of the abutment being directed away from the fixture. Conversely, the term "apical" indicates a direction towards an insertion end of the component. Thus, apical and coronal are opposite directions. Furthermore, the term "axial direction" or "axially" is used throughout this application to indicate a direction taken from the coronal end to the apical end, or vice versa. The term "radial direction" or "radially" indicates a direction perpendicular to the axial direction.

A blind bore or socket may extend apically into the fixture body from the coronal end to an end surface in-between the apical and coronal ends of the fixture body for a superstructure to be secured to the fixture. The socket may comprise an internally-threaded section for screw connection of the superstructure to the fixture. A section of the socket, such as the coronal section, may be tapered towards the apical end. The tapered section is suitably arranged coronally of the internally-threaded section. The socket may be provided in a subgingival type fixture. Alternatively, a socket may be in the form of a socket in a head portion of a dental fixture, e.g. for transgingival implementation.

The fixture may be used in a one stage procedure or a two stage procedure. In a one stage procedure a healing or temporary abutment is connected to the fixture to form the gingival tissue, and after a healing period the healing or temporary abutment is replaced by a permanent abutment. For a two stage procedure the fixture is provided with a cover screw and the gingival tissue is sutured over the fixture and cover screw, and after a healing period the tissue is opened up and an abutment is connected to the fixture after removal of the cover screw.

The fixture may have a conically tapering end portion which tapers towards the coronal end. The axial extent of this coronal end portion is small compared to the total length of the fixture, as an example no more than 4 % of the total length, such as in the range of 1.5% -3.7%. The coronal end portion may suitably be provided without a threaded surface, e.g. having a smooth or a roughened (such as blasted) surface.

As previously discussed with regard to the various aspects of the invention, the fixture may have a substantially flat coronal end surface which is perpendicular to the longitudinal axis of the fixture. Alternatively, the coronal end surface may have a sloped contour relative to the longitudinal axis of the fixture, e.g. such that when positioned within the jawbone the length of the fixture is larger on a lingual side and shorter on a buccal side of the fixture. Another alternative is a saddle-shaped or wave-like coronal end surface.

The length of the dental fixture may be in the range of 5-19 mm, depending on the clinical situation. The outer diameter of the dental fixture may suitably be in the range of 2-6 mm, such as 3-5 mm.

The fixture may be substantially cylindrical or slightly tapering from the coronal end towards the apical end. If the fixture has a slight tapering, the core of the fixture and the outer periphery defined by e.g. thread tops may have the same or different angle of taper. Furthermore, the core of the fixture may be cylindrical while the thread tops describe a conicity or, conversely, the core of the fixture may be tapered while the thread tops describe a generally cylindrical geometry. Alternatively, the fixture may comprise a combination of one or more cylindrical and/or one or more tapering portions. Thus, one or more portions of the fixture may have e.g. thread tops lying in a common imaginary cylindrical surface, which cylindrical surface is parallel with the longitudinal axis of the fixture. Alternatively or additionally, one or more portions of the fixture may have thread tops lying in an imaginary conical surface which in the apical direction is tapering towards the longitudinal axis.

The externally threaded fixture may comprise one or more thread spirals.

The term "pitch" is used to indicate the axial distance between adjacent tops of a threading. The term "lead" is used to indicate the distance advanced parallel to the longitudinal axis when the fixture is turned one revolution, i.e. it corresponds to the pitch multiplied with the number of thread spirals. For a single thread spiral having a constant pitch, the lead is equal to the pitch; for a double thread spiral, the lead is twice the pitch.

The term "microthread" is used to indicate a thread having a height which is no greater than 0.2 mm. According to at least one example embodiment, the fixture is provided with microthreads having a height in the range of 0.02-0.2 mm, such as 0.05-.015 mm, for instance 0.1 mm. The term "macrothread" is used to indicate a thread having a height which is greater than 0.2 mm. According to at least one example embodiment, the fixture is provided with macrothreads having a height in the range of 0.25-0.35 mm, such as 0.3 mm.

Suitably, microthreads may be located coronally of macrothreads. For instance, microthreads may be arranged to engage dense cortical bone and macrothreads may be arranged to engage porous spongious/cancellous bone. The lead of a microthread suitably corresponds to the lead of a macrothread. The macrothread pitch may, as an example, be 2-4 times, such as 3 times, the pitch of the microthreads. The pitch (top-to-top spacing) at a fixture portion provided with microthreads may be around 0.20-0.24 mm. The pitch (top-to-top spacing) at a fixture portion provided with macrothreads may be around 0.60-0.72 mm.

Microthreads can be regarded as defined, oriented roughness. A non-oriented roughness having smaller dimensions, for instance obtained by blasting, etching, etc., may be superimposed on microthreads as well as on macrothreads.

A thread profile comprises two flanks, a top radius R, at the apex formed between the intersection of said two flanks, a bottom radius r formed between two adjacent threads, said flanks forming an angle v with a plane which is perpendicular to a cross section of said thread and perpendicular to a plane which is a tangent to the surface of the fixture body, said profile further having a height D. Suitably for 10° ≤v < 35 °, R is greater than 0.4 x D and, for 35° ≤ v < 55 °, R is greater than 0.2 x D.

### Brief description of the drawings

Fig. 1 illustrates an implant assembly according to at least one example embodiment of the invention.
Fig. 2 illustrates an implant assembly according to at least one other example embodiment of the invention.
Fig. 3 illustrates a driver engageable with a fixture in accordance with at least one example embodiment of the invention.
Figs. 4-11 illustrate various circumferential contours of engagement portions in accordance with different example embodiments of the invention.
Fig. 12 illustrates a slope topped fixture.

### Detailed description of the drawings

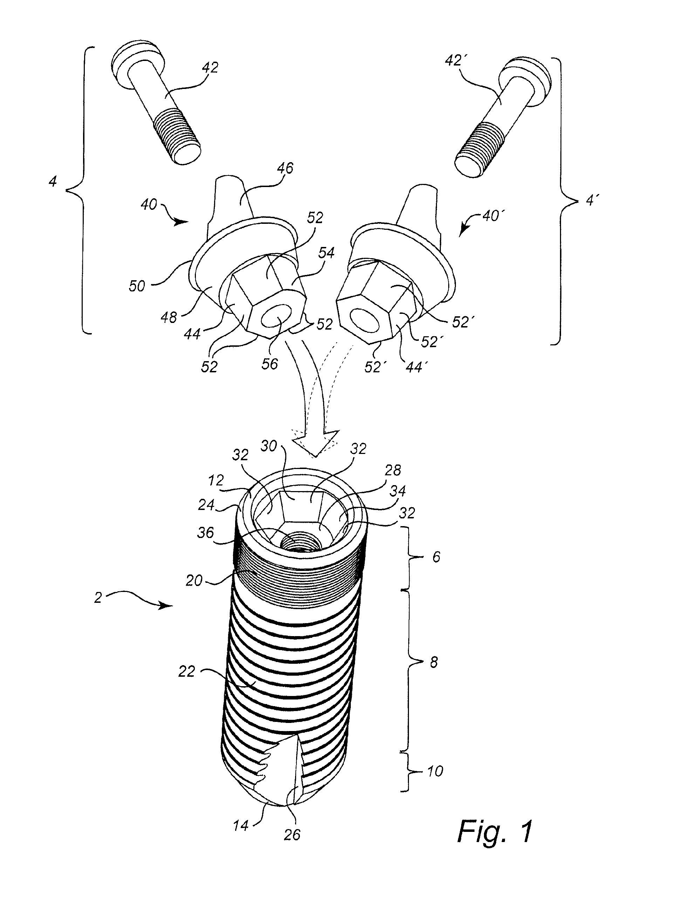

Fig. 1 illustrates an implant assembly according to at least one example embodiment of the invention. The implant assembly comprises a dental fixture 2 and one of the dental components 4 or 4', herein illustrated as two-piece abutments. As will be explained, the abutment 4 on the left side can only mate with the fixture 2 in one rotational position (indexing position), while the abutment 4' on the right side can mate with the fixture 2 in six rotational positions (indexing positions).

The herein illustrated fixture 2 has a coronal portion 6 extending apically from a coronal end 12 of the fixture 2, and an apical portion 10 extending coronally from an apical end 14 of the fixture. An intermediate portion 8 extends between the coronal portion 6 and the apical portion 10.

The apical portion 10 has a conicity tapering towards the apical end 14 of the fixture 2 to ease insertion of the fixture 2 into a bore-hole in the jawbone. The angle of taper relative to the longitudinal axis of the fixture 2 may, for instance, be about 10°-20°, such as 15°. The apical portion 10 may be non-threaded, however, in an alternative embodiment the apical portion of the fixture 2 may be provided with an external thread. Whether provided with thread or not, the apical portion 10 may optionally, similarly to the coronal 6 and/or the intermediate portion 8, further be provided with a blasted, etched or otherwise roughened surface structure.

The fixture 2 has a core from which a surface structure projects, in the illustrated example being in the form of threads.

The coronal portion 6 is herein illustrated as being at least partly provided with microthreads 20, having three thread spirals, although another number is conceivable, such as 1, 2, 4 or more spirals. Although microthreads 20 have been illustrated, according to at least an alternative example embodiment the coronal portion is at least partly provided with macrothreads 22, similarly to the intermediate portion 8, either as a separate thread spiral or as a continuation of the thread spiral at the intermediate portion 8. According to at least another alternative example embodiment, instead of microthreads, the coronal portion may be provided with a plurality of annular ridges, which to the naked eye could give the same visual appearance as microthreads. Other conceivable alternatives are circumferential lines of beads or non-oriented/randomly provided projections.

In the illustrated example embodiment, the macrothreads 22 at the intermediate portion 8 has the same lead as the microthreads 20 at the coronal portion 6. However, the pitch of the macrothreads 22 is three times the pitch of the microthreads 20, since the microthreads 20 comprise three thread spirals.

The length of the herein illustrated coronal portion 6 may be about 1-2 mm, such as 1.5 mm. However, shorter or longer lengths are readily conceivable. The relative length of coronal portion 6 may also be selected from a wide range, such as 5-50% of the total length of the fixture 2, e.g. 10-20%.

The coronal portion 6 comprises a tapering end portion 24, which tapers towards the coronal end 12 of the fixture 2. The tapering end portion 24 is no more than 4% of the total length of the fixture 2. The surface of the tapering end portion 24 may be non-threaded, either smooth or blasted (or otherwise roughened).

The intermediate portion 8 comprising macrothreads 22 is herein illustrated as having one thread spiral, however, the intermediate portion 8 may alternatively have two or more thread spirals. Similarly, although illustrated as having a substantially straight cylindrical shape, the intermediate portion 8 may have a slightly tapering shape towards the apical portion 10, in which case the angle of taper may e.g. be 3° or less, such as about 1°-2°.

Cutting recesses 26 or grooves extend from the apical end 14 into the intermediate portion 8. The number of cutting recesses 26 may be one or more, such as two, three or four cutting recesses, suitably symmetrically positioned about the circumference of the apical end 14 of the fixture 2 for self-tapping of the fixture 2 when being screwed/rotated into a bore-hole provided in the maxilla or mandible.

A socket 28 having an open end is provided in the coronal end 12 of the fixture 2. The socket 28 extends apically into the fixture 2. The socket 28 is for receiving a dental component such as one of the illustrated abutments 4, 4' which will bridge the gingiva overlying the bore-hole and support/present a prosthetic part. However, it may also receive other dental components such as an abutment replica, a driver, a healing cap and an impression pick-up element.

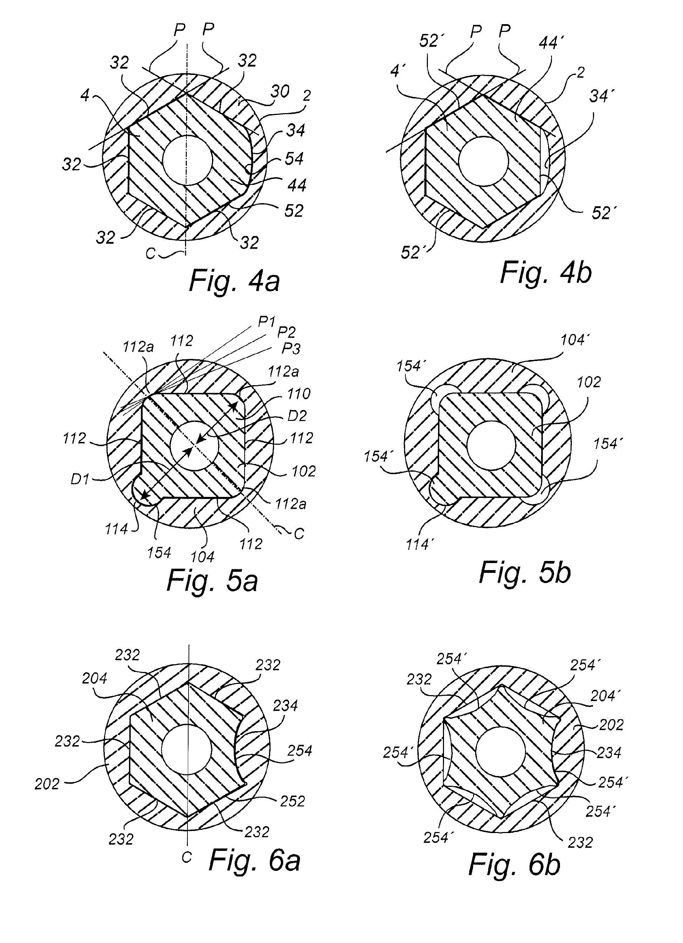

The socket 28 is provided with a component engagement portion 30 comprising a circumferential contour defined by a plurality of first wall portions 32 and one second wall portion 34. This circumferential contour is also shown as a cross-section of the engagement portion in Fig. 4a (the left hand side abutment 4 being connected) and in Fig. 4b (the right hand side abutment 4' being connected). Thus, particularly with reference to Fig. 4a, each one of the first wall portions 32 is contained in a respective peripheral plane P, i.e. each one of the first wall portions 32 are straight segments. The second wall portion 34, however, is in this example illustrated as being curved, although other non-straight shapes are readily conceivable alternatives. The peripheral plane P of each first wall portion 32 does not intersect any other one of said first wall portions 32 and does not coinciding extension with any peripheral planes of any other one of the first wall portions. The curved second wall portion 34 is located entirely on one side of a geometrical centre plane C which coincides with the extension of the centre axis of the component engagement portion 30, wherein the curved second wall portion 34 and the straight first wall portion 32 on the other side of said centre plane C are asymmetrically arranged with respect to the centre plane C.

Expressed in another way, the circumferential contour is derived from a substantially polygonal shape (in this example a hexagon) having a plurality of straight segments (first wall portions 32) interconnected at corners, with the modification that:
- one segment (second wall portion 34) is deformed while the others five segments (first wall portions 32) are straight.

The socket 28 illustrated in Fig. 1 is further provided with an internally threaded apical section 36.

In Fig. 1, the dental component 4 on the left side is illustrated as a two-piece abutment consisting of a body part 40 and a screw part 42. The body part 40 comprises a fixture engagement portion 44 and a dental crown-receiving or prosthesis-receiving portion 46 which extends coronally of the fixture 2 above the gingiva. An extension portion 48, herein illustrated as coronally flaring up to a shoulder 50, is intended to extend through the gingiva and is provided between the fixture engagement portion 44 and the prosthesis-receiving portion 46.

The fixture engagement portion 44 the abutment 4 has a shape matching that of the component engagement portion 30 of the fixture 2. Thus, while five of the sides or wall portions 52 are straight segments, the sixth side or wall portion 54 is bulging away from the centre axis of the fixture engagement portion 44 and thereby deforms the hexagon. This abutment 4 can only mate with the fixture 2 in one rotational orientation, i.e. only one indexing position. This is also clear from the cross-sectional view of Fig. 4a.

The body part 40 of the abutment 4 is provided with a through-hole 56, wherein the screw part 42 is adapted to be inserted into the through-hole 56 and engage the internal thread 36 of the fixture 2 in order to secure the body part 40 to the fixture 2.

The fixture engagement portion 44' of the abutment 4'on the right hand side has a circumferential contour in the shape of a hexagon. Thus, all six segments or side walls 52' are equal. Consequently, this abutment 4' can mate with the fixture 2 in six indexing positions (see Fig. 4b). After the body part 40' has been arranged in the desired rotational indexing position relative to the fixture 2, and the walls or segments of mating engagement portions have provided a rotational lock, the screw part 42' is inserted into the internally threaded apical section 36 of the fixture 2 and is tightened. Finally, a prosthetic tooth is attached to the abutment 4'.

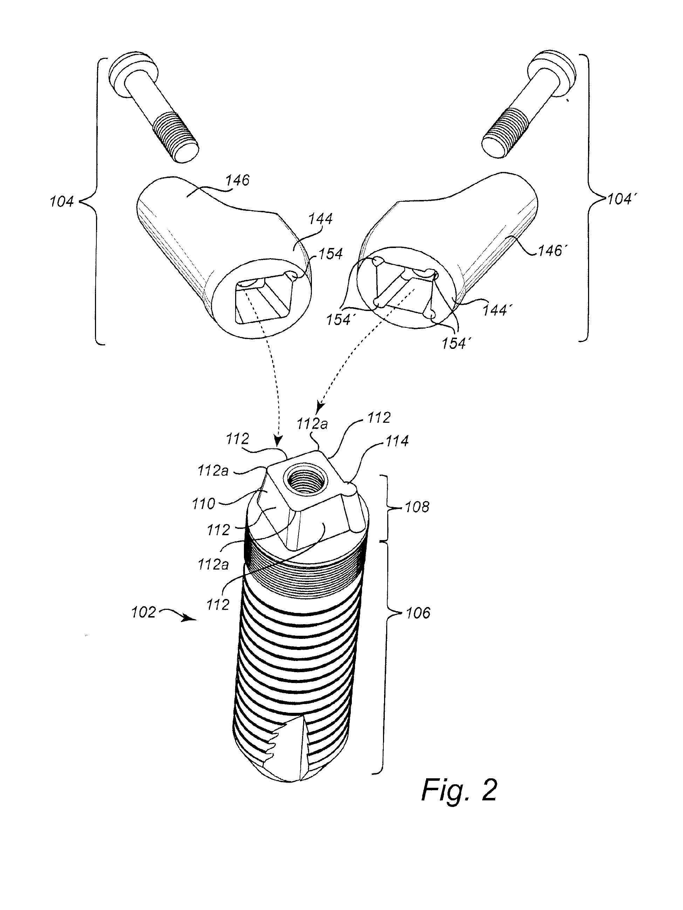

Fig. 2 illustrates an implant assembly according to at least one other example embodiment of the invention. In this example, a transgingival fixture 102 is illustrated. Thus, similarly to the previously illustrated fixture 2, the present fixture 102 has a bone apposition portion 106 adapted to be submerged into the bone tissue. Additionally, the present fixture 102 has a summit portion 108 adapted to be located outside the bone. Thus, while in Fig. 1 the fixture 2 is a female part configured to received the male part dental components 4, 4', the present fixture 102 is a male part configured to receive female part dental components. The dental component are herein illustrated in the form of angled abutments 104, 104'.

A component engagement portion 110 on the summit portion 108 of the fixture 102 has a circumferential contour defined by a plurality of first wall portions 112 and 112a, four of which are straight segments 112 and three of which are curved corners 112a. From geometrical point of view, the three curved corners 112a form respective arcs of three different circles. Thus, only a minor part of the circumferential contour defines three separate arcs of circles. Thus, each one of said three curved first wall portions 112a have a plurality of peripheral planes P1, P2, P3, etc. tangential to the respective curved first wall portion 112a. This is illustrated in Fig. 5a. None of said peripheral planes P1, P2, P3 intersect any other one of said first wall portions 112, 112a. In addition to the first wall portions 112, 112a, there is also a second wall portion 114, herein illustrated as a bulge on a corners between two straight first wall portions 112 (see Fig. 2 and Fig. 5a). As can be seen in Fig. 5a, the second wall portion 114 is located entirely on one side of a geometrical centre plane C which coincides with the extension of the centre axis of the component engagement portion 110, wherein the second wall portion 114 and the curved first wall portion 112a on the other side of said centre plane C are asymmetrically arranged with respect to the centre plane C. In other words, the distance D1 from the centre axis to the periphery of the second wall portion 114 is, in this example, larger than the distance D2 to the curved first wall portion 112a.

Both angled abutments 104, 104' depicted in Fig. 2 comprise a fixture engagement portion 144, 144' having a first longitudinal axis and a prosthesis receiving portion 146, 146' having a second longitudinal axis. The first and second longitudinal axes are inclined at a non-zero angle relative to each other. The walls of the fixture engagement portion 144, 144' are located on an inner perimeter of the respective abutment 104, 104', the inner perimeter defining an interior space of the abutment, which is adapted to fit over the summit portion 108 of the fixture 102.

The abutment 104 on the left hand side of Fig. 2 has a fixture engagement portion 144 matching that of the component engagement portion 110 of the fixture 102. Thus, the abutment 104 has an internal socket adapted to be placed over the summit portion 108 of the fixture 102. The internal socket is generally square shaped with one radially enlarged groove 154 at one of the corners. That groove 154 matches the bulge 114 at the corner of the component engagement portion 110 of the fixture 102. Thus, the abutment 104 on the left hand side in Fig. 2 can only be connected to the fixture 102 in one rotational position relative to the fixture 102. The abutment 104 connected to the fixture 102, and the bulge 114 engaging the grove 154 is illustrated in Fig. 5a.

The abutment 104' on the right hand side in Fig. 2 has four radially enlarged grooves 154', one at each corner. Any one of the four grooves 154' can fit with said bulge 114 on the fixture 102. Thus, the abutment 104' on the right hand side can be connected in four different rotational positions relative to the fixture 102, which can also be understood from the cross-sectional view in Fig. 5b.

It should be understood that suitably configured angled abutments may be used in connection with other types of fixtures as well, such as the one illustrated in Fig. 1.

The component engagement portion 110 in Fig. 2 has been illustrated as a coronally tapering section with all of said first wall portions 112, 112a and said second wall portion 114 tapering coronally. As an alternative to the tapering, the wall portions could be aligned substantially parallel with the centre axis.

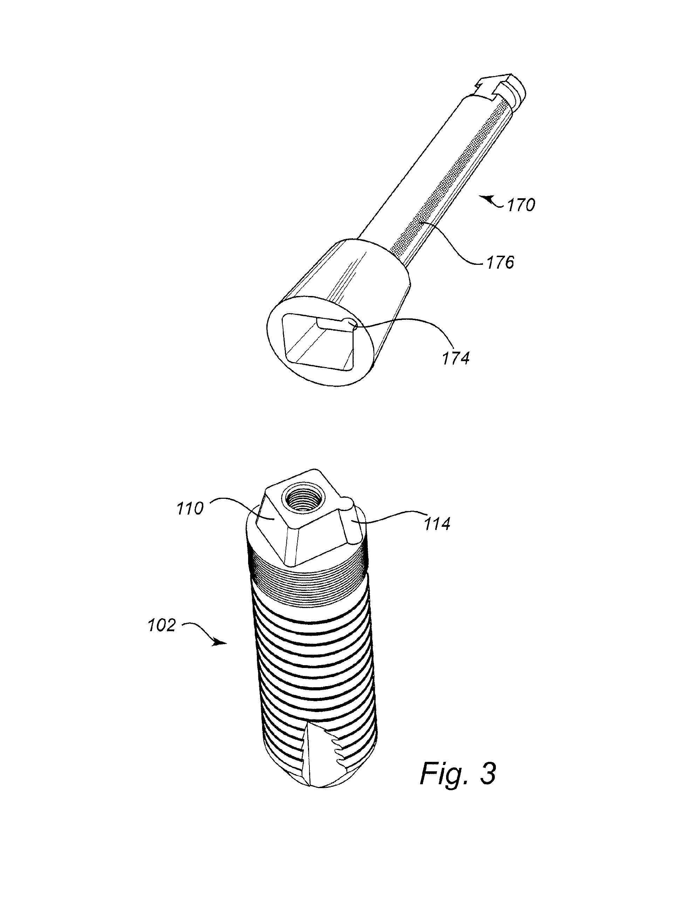

Fig. 3 illustrates a driver 170 engageable with a fixture in accordance with at least one example embodiment of the invention. For simplifying the discussion, the same component/fixture interface is shown as in Fig. 2. Thus, the component engagement portion 110 of the fixture 102 has a substantially square shape, with one radially projecting corner bulge 114. The driver 170 has a corresponding internal socket with a radially enlarged corner groove 174 which is adapted to mate with the bulge 114 of the fixture 102.The driver 170 is provided with a visually distinctive marking 176, herein illustrated as an axial line, aligned with the groove 174. The distinctive marking 176 may have a color which is different from the rest of the driver 170, it may have different texture, or be slightly raised from the rest of the surface, or any other appropriate viewable distinction compared to the rest of the driver 170. By viewing the axial line 176, a user will be able to deduce the rotational position of the groove 174 and bulge 114, i.e. deduce the rotational position of the fixture 102 in the jawbone. The distinctive marking 176 may be useful, for instance when the fixture 102 is installed obliquely into the bone. In such case an angled abutment may be connected to the fixture 102, to ensure that the prosthesis-receiving portion of the abutment will be correctly arranged in the jawbone, thus allowing a correct alignment of the prosthetic tooth with the surrounding teeth or correct alignment with a bridge structure. A dental professional may have a whole set of different angled abutments, each having the distinguishing features of the circumferential contour of the fixture engagement portion at different rotational locations relative to the inclination of the prosthesis-receiving portion. In this example there may be a set of different angled abutments, each having its prosthesis-receiving portion inclined in a different direction relative to a groove matching the bulge 114 on the fixture 102. Thus, if the fixture 102 is installed obliquely into the bone, the dental professional will realize by looking at the distinctive marking 176 on the driver 170, the rotational position of the component engagement portion 110, i.e. the bulge 114 on the fixture 112, and this will help him/her to choose an angled abutment from said set of abutments which will provide the correct inclination in the oral cavity.

Also, if the dentist wishes to install an implant at a certain location, for instance to replace one or more front teeth or to construct a bridge, he/she may already from the beginning decide how and which ones from a set of abutments or other dental components should be aligned in the oral cavity. Thus, the dentist can decide in advance to align the features of the circumferential contour of the component engagement portion of the fixture in a certain direction. For instance, in the example of Fig. 3, he/she may decide to have the bulge 114 directed buccaly. Thus, since the driver 170 can only fit with the fixture 102 in one rotational position, and therefore the orientation of the distinctive marking 176 relative to the bulge 114 is known, the dentist can make sure when installing the fixture 102 that the bulge 114 ends up in the desired direction. Then, using an abutment which can only be connected in one rotational orientation relative to the fixture, the abutment will automatically become aligned as initially intended by the dentist.

Figs. 4-11 illustrate various circumferential contours of engagement portions in accordance with different example embodiments of the invention.

The circumferential contours shown in Figs. 4a and 4b correspond to those of the fixture 2 and abutments 4, 4' shown in Fig. 1, and the circumferential contours shown in Figs. 5a and 5b correspond to those of the fixture 102 and abutments 104, 104' shown in Fig. 2.

Fig. 6a shows a cross section of a component engagement portion of the fixture 202, wherein the circumferential contour is based on a hexagonal shape. Similarly to Fig. 4a, in Fig. 6a five segments 232 are straight, while the sixth segment 234 has been deformed. While the fixture of Fig. 4a has an increased radius of the sixth segment 34 (thereby allowing an ordinary hexagonal engagement portion of an abutment to be positioned in six different rotational positions relative to the fixture 2 - see Fig. 4b), the fixture 202 of Fig. 6a has a reduced radius of the sixth segment 234. Thus, the five straight segments 232 can be regarded as first wall portions of the circumferential contour of the component engagement portion, each first wall portion being contained in a respective peripheral plane. The deformed sixth segment 234 can be regarded as a second wall portion which does not form a mirror image with the oppositely located first wall portion 232, i.e. they are asymmetrically arranged with respect to centre plane C coinciding with the centre axis of the component engagement portion.

In Fig. 6a a dental component 204 has a fixture engagement portion which has a circumferential contour mimicking that of the fixture 202, i.e. having only one deformed segment 254 and five straight segments 252 of a hexagon. The dental component 204 can, therefore, only be arranged in the illustrated indexing position, in which the deformed segment 254 of the dental component 204 mates with the deformed segment 234 of the fixture 202.

In Fig. 6b, another dental component 204' has been connected to the same fixture 202. This dental component 204' has all six segments 254' deformed by a centrally directed curvature matching the curvature of the deformed sixth segment 234 of the fixture 202. Thus, the dental component 204 can be arranged in six different rotational positions, since any one of its segments 254' can mate the sixth deformed segment 234 of the fixture 202. It should be noted that other number of rotational positions are conceivable, depending on the number of deformed segments of the dental component. For instance if the dental component would only have two deformed segments, than the dental component could be arranged in two different rotational positions relative to the fixture.

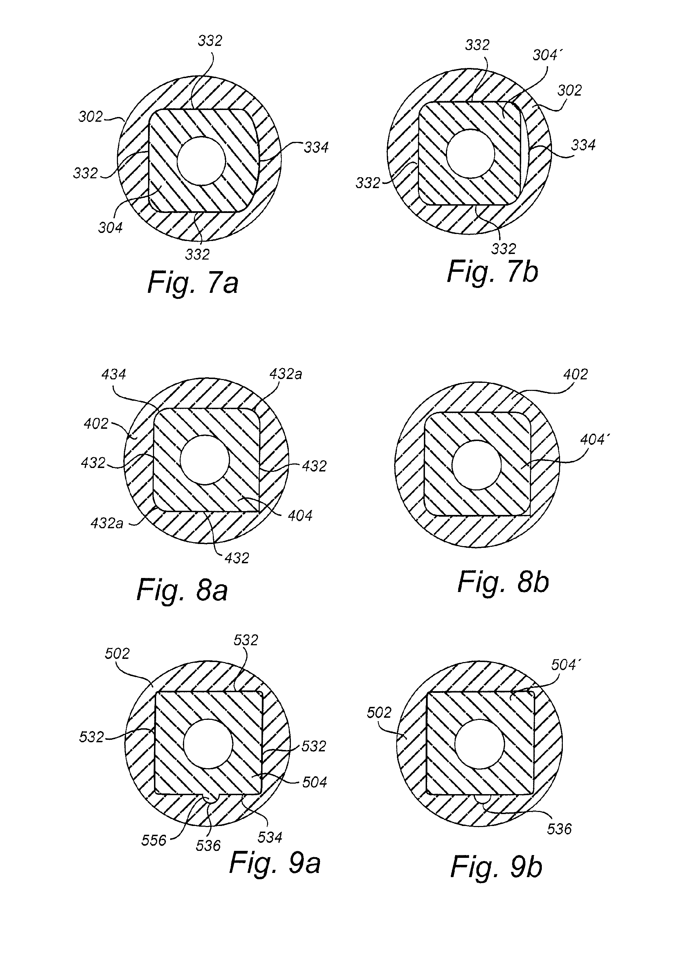

In Fig. 7a, the fixture 302 has a component engagement portion having a circumferential contour which is derived from a substantially square shape (although the corners may be slightly rounded). Three segments 332 out of four for forming a square are straight, while the fourth segment 334 is radially outwardly deformed in a curvature, similarly to the deformation in Fig. 4a. The dental component 304 in Fig. 7a has the corresponding contour and can only be arranged in one rotational position relative to the fixture. In Fig. 7b, the dental component 304' does not have the deformed segment but has a substantially square shape which can be rotated into four different positions relative to the fixture.

Also in Fig. 8a the fixture 402 has a component engagement portion having a circumferential contour which is derived from a substantially square shape. Three of the corners are slightly rounded (alternatively they could be truncated by a short connecting segment), while the fourth corner is a standard right angle. In terms of first and second wall portions as defined in the claims, the first wall portions may be both the straight segments 432 and two diametrically oppositely located rounded corners 432a. While the third rounded corner can be regarded as a second wall portion 434. That second wall portion 434 is, asymmetrical with respect to the right first wall portions 432 (forming the right angled corner) on the other side of a centre plane C coinciding with the centre axis of the component engagement portion. The correspondingly shaped fixture engagement portion of a dental component 404 can only mate with the fixture 402 in one rotational position.

In Fig. 8b, to the same fixture 402 as in Fig. 8a, another dental component 404' has been connected. This dental component has a fixture engagement portion having a circumferential contour having substantially the square shape as in Fig. 7b and can thus be rotated into four different connecting positions relative to the fixture 402.

It is not necessary to deform an entire segment of a polygon, but according to at least one example embodiment, only a portion of the segment is deformed. For instance, in Fig. 9a the component engagement portion of the fixture 502 having a substantially square cross-section, however one of the four sides of the square is provided with a recess 536. Thus, in Fig. 9a there are three first wall portions 532 without a recess, and a second wall portion 534 with a recess 536. A dental component 504 having a protrusion 556 matching the recess 536 can only be arranged in one rotational position relative to the fixture 502. In Fig. 9b the dental component 504' does not have a protrusion and can thus be arranged in four different rotational positions relative to the fixture 502.

As an alternative to the recess 536 shown in Fig. 9a, the fixture 502 could have a radially inwardly directed protrusion (or a plurality of protrusions along the second wall portion, or a plurality or recesses along the second wall portion). A dental component having only one recess would be arrangeable in only one rotational position relative to the fixture, while a dental component having one matching recess on each side would be arrangeable in four rotational positions relative to the fixture. Whether the fixture is provided with said outwardly directed recess or said inwardly directed protrusion, the distance from the centre axis to the recess/protrusion is different compared to the distance from the centre axis to the opposing first wall portion. It should be understood that recesses/protrusions could also arranged on other circumferential contours, e.g. on polygons such as hexagons, octagons etc.

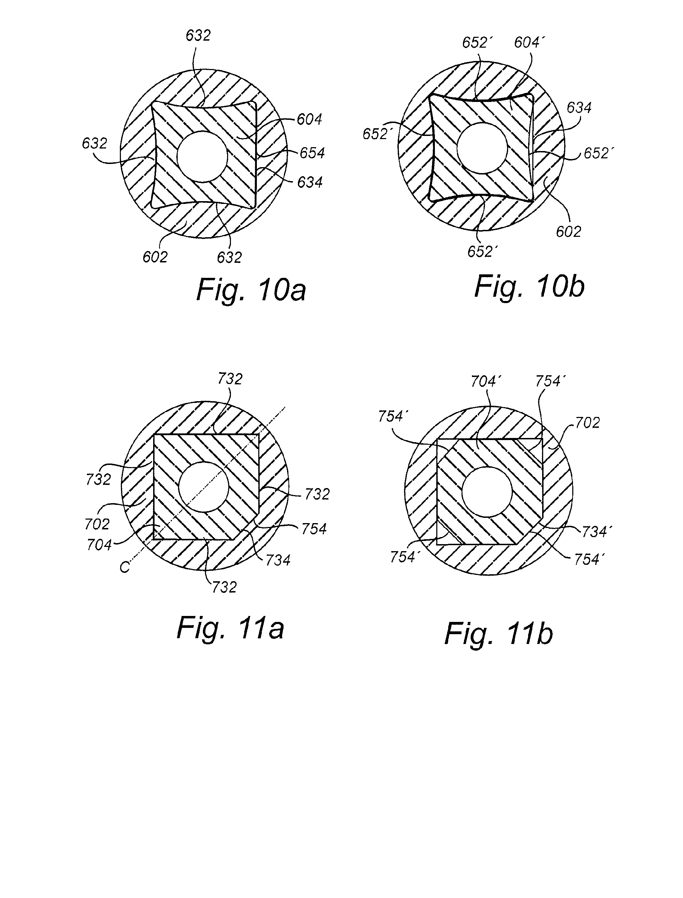

In Fig. 10a, the circumferential contour of the component engagement portion of the fixture 602 is derived from a square shape, with the modification that three segments 632 have been deformed, by a curvature towards the centre axis. Only one segment 634 is straight. The matching dental component 604 can only be arranged in one rotational position, since the straight segment 654 of the dental component 604 does not fit with the inwardly curved segments 632 of the fixture 602. In Fig. 10b, the dental component 604' has all four segments 652' deformed and can therefore be arranged in four different positions relative to the fixture 602. One of the deformed segments of the abutment will leave a space to the straight segment of the fixture.

In Fig. 11 one of the corners of the square shaped contour of the component engagement portion of the fixture 702 has been deformed. The corner has been truncated and now presents a straight second wall portion 734 which interconnects two first wall portions 732, one at each end of the second wall portion 734. The second wall portion 734 is angled to the two neighbouring first wall portions 732. The second wall portion 734 is asymmetrically arranged with respect to the first wall portions 732 on the other side of a centre plane coinciding with the centre axis of the component engagement portion. A dental component 704 having a corresponding truncated corner in the form of an interconnecting second wall portion 754 can only mate in one rotational orientation relative to the fixture 702. In Fig. 11b all four corners of a dental component 704' have been truncated by and presents inclined second wall portions 754'. Thus, the dental component 704' in Fig. 11b can mate with the fixture 702 in four different rotational positions.

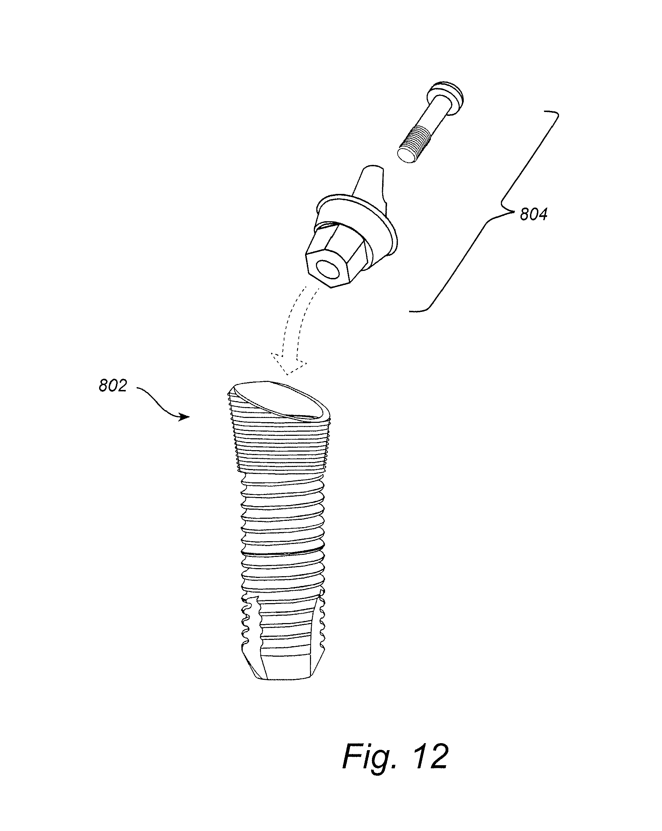

Fig. 12 illustrates a slope topped fixture 802. The coronal end of the fixture is contoured such that when positioned within the jawbone its length is greater on the lingual side than on the buccal side. Therefore, the fixture 802 is suitably oriented in a certain direction in the jawbone. An abutment 804 to be connected the fixture 802 may, if desired, have a corresponding sloped portion and should therefore be oriented in the same direction as the fixture. Suitably, such an abutment will only be allowed to have a single indexing position relative to the fixture. For instance, the abutment/fixture interface may be the modified hexagon illustrated in Fig. 1, or any other appropriate shape within the scope of the invention.

## Claims

1. A dental component, comprising a fixture engagement portion for engaging the dental component with a dental fixture adapted to be inserted into a jawbone,
- the fixture engagement portion comprising a circumferential contour defined by a plurality of first wall portions and at least one second wall portion, wherein a major part of said circumferential contour does not form an arc of a circle,
- each one of the first wall portions being contained in a respective peripheral plane or having a plurality of peripheral planes tangential to the wall portion, wherein said one or more peripheral planes of each first wall portion do not intersect any other one of said first wall portions,
- wherein the second wall portion is located entirely on one side of a geometrical centre plane which coincides with the extension of the centre axis of the fixture engagement portion, wherein the second wall portion and any wall portion on the other side of said centre plane are asymmetrically arranged with respect to the centre plane.

2. The dental component as claimed in claim 1, wherein said circumferential contour has the shape of a polygon with one deformed side or one deformed corner.

3. The dental component as claimed in claim 1, wherein said circumferential contour has the shape of an n-sided polygon interconnected at n corners in which n-1 sides have been equally deformed while the remaining side is straight, or in which n-1 corners have been equally deformed while the remaining corner is non-deformed, wherein n ≥ 3.

4. A dental component, comprising a fixture engagement portion for engaging the dental component with a dental fixture adapted to be inserted into a jawbone, the fixture engagement portion comprising a circumferential contour derived from a substantially polygonal shape having a plurality of straight segments interconnected at corners, with the modification that:
- one segment of the polygonal shape is deformed while the others segments are straight, or only one segment of the polygonal shape is straight while the others are deformed, or
- one corner of the polygonal shape is deformed relative to the others, or all corners but one are deformed.

5. The dental component as claimed in any one of claims 1-4, wherein said circumferential contour has substantially the shape of a square or a hexagon with only one deformed segment or only one deformed corner.

6. The dental component as claimed in any one of claims 1-4, wherein said circumferential contour has substantially the shape of a square with only three deformed segments or corners, or has the shape or a hexagon with only five deformed segments or corners.

7. The dental component as claimed in any one of claims 2-6, wherein a first distance from the centre axis of the fixture engagement portion to a position along one of the polygon segments or corners is longer than the distance from the centre axis to a corresponding position along any of the other polygon segments or corners.

8. The dental component as claimed in any one of claims 1-7, wherein the fixture engagement portion comprises a substantially cylindrical section, wherein said wall portions or segments are provided at said substantially cylindrical section.

9. The dental component as claimed in any one of claims 1-7, wherein the fixture engagement portion comprises an apically tapering section, wherein said wall portions or segments are provided at said apically tapering section.

10. The dental component as claimed in any one of claims 1-9, being a
component selected from the group consisting of an abutment, an abutment replica, an abutment blank, a driver, a healing cap and an impression pick-up element.

11. The dental component as claimed in any one of claims 1-10, being in the form of an abutment comprising a body part and a screw part, wherein the body part comprises
- said fixture engagement portion,
- a prosthesis-receiving portion which extends coronally of the fixture, and
- a through hole extending through the body part,
wherein the screw part is adapted to be inserted into the through hole and engage an internal thread of the fixture in order to secure the body part to the fixture.

12. The dental component as claimed in claim 10 or 11, being in the form of an angled abutment in which the fixture engagement portion has a first longitudinal axis and the prosthesis-receiving portion has a second longitudinal axis, wherein the first and second longitudinal axes are inclined at a non-zero angle relative to each other.

13. The dental component as claimed in any one of claims 1-10, being in
the form of a driver for driving the fixture into the jawbone, wherein the driver is provided with a distinctive mark to indicate to a user the rotational position of the fixture relative to the jawbone as the fixture is being driven into the jawbone.

14. A dental fixture for insertion into a jawbone, comprising a component
engagement portion being configured to receive a dental component,
- the component engagement portion comprising a circumferential contour defined by a plurality of first wall portions and at least one second wall portion, wherein a major part of said circumferential contour does not form an arc of a circle,
- each one of the first wall portions being contained in a respective peripheral plane or having a plurality of peripheral planes tangential to the wall portion, wherein said one or more peripheral planes of each first wall portion do not intersect any other one of said first wall portions,
- wherein the second wall portion is located entirely on one side of a geometrical centre plane which coincides with the extension of the centre axis of the fixture engagement portion, wherein the second wall portion and any wall portion on the other side of said centre plane are asymmetrically arranged with respect to the centre plane.

15. A dental fixture for insertion into a jawbone, comprising a component engagement portion being configured to receive a dental component, the component engagement portion comprising a circumferential contour derived from a substantially polygonal shape having a plurality of straight segments interconnected at corners, with the modification that:
- one segment of the polygonal shape is deformed while the others segments are straight, or only one segment of the polygonal shape is straight while the others are deformed, or
- one corner of the polygonal shape is deformed relative to the others, or all corners but one are deformed.

16. The dental fixture as claimed in claim 15 or 16, wherein the component engagement portion comprises the corresponding features and shapes as those defined for the fixture engagement portion of the dental component according to any one of claims 1-9.

17. A dental implant assembly, comprising a dental component as claimed in any one of claims 1-13 connected to or to be connected to a fixture as claimed in any one of claims 14-16, wherein the dental component only has one possible indexing position relative to the fixture.
